# EUROPÄISCHE PATENTSCHRIFT

(11) **EP 0 668 201 B1**
(45) Veröffentlichungstag und Bekanntmachung des Hinweises auf die Patenterteilung: **22.04.1998**
(21) Anmeldenummer: 95101623.7
(22) Anmeldetag: 07.02.1995
(51) Int. Cl.: B60T 13/52, B60T 13/57, B60T 13/72

(54) **Pneumatischer Kraftverstärker mit elektromagnetischer Hilfssteuerung, insbesondere für Kraftfahrzeug-Bremsanlagen**
Pneumatic servo with electromagnetic auxiliary control, especially for motor vehicle braking systems
Servo-moteur pneumatique à commande électromagnétique auxiliaire, notamment pour circuits de freinage de véhicules automobiles

(30) Priorität: 17.02.1994 DE 4405076
(43) Veröffentlichungstag der Anmeldung: 23.08.1995
(73) Patentinhaber: LUCAS INDUSTRIES PUBLIC LIMITED COMPANY, Solihull, West Midlands B91 3TX (GB)
(72) Erfinder: Schlüter, Peter, D-56206 Kammerforst (DE)
(74) Vertreter: Schmidt, Steffen J., Dipl.-Ing.

(56) Entgegenhaltungen:
- WO-A-93/21048
- WO-A-94/11226

## Beschreibung

Die Erfindung betrifft einen pneumatischer Kraftverstärker mit elektromagnetischer Hilfssteuerung, insbesondere für Kraftfahrzeug-Bremsanlagen, nach dem Oberbegriff des Anspruchs 1.

Bei einem bekannten Bremskraftverstärker dieser Gattung (DE-A 4211849) ist der Kolben ausschließlich zur Übertragung von Betätigungskräften und zum mechanischen Steuern des Ventilkörpers ausgebildet. Das Anschlagglied ist am Kolben befestigt und erstreckt sich durch miteinander fluchtende radiale Aussparungen des Ventilkörpers und des Ventilgehäuses nach außen, wo es mit einem am Verstärkergehäuse ausgebildeten Anschlag zusammenwirkt. Die Aussparung des Ventilkörpers ist so bemessen, daß dessen Ruhestellung durch unmittelbare Anlage des Ventilkörpers am Anschlagglied bestimmt ist. Die zwischen Ventilkörper und Kolben angeordnete Dichtung ist eine Lippendichtung, die in einer Ringnut des Kolbens gehalten ist und unabhängig von der Stellung des Ventilkörpers in bezug auf den Kolben dichtend an einer zylindrischen Innenwand des Ventilkörpers anliegt.

Bei dieser bekannten Anordnung kann der Ventilkörper elektromagnetisch betätigt werden, um eine vom Fahrer gewollte, durch mechanische Krafteinleitung über das Betätigungsglied hervorgerufene Bremsung zu unterstützen, wenn ein beispielsweise am Betägigungsglied angeordneter Sensor feststellt, daß eine bestimmte Betätigungsgeschwindigkeit überschritten wird, was als Zeichen dafür gewertet wird, daß der Fahrer eine Notbremsung beabsichtigt. Wenn der Fahrer anschließend erkennt, daß anstelle einer Notbremsung eine normale Bremsung genügt, wird er die auf das Bremspedal ausgeübte Kraft vermindern und dadurch Vorgänge im Bremskraftverstärker auslösen, die elektronisch überwacht und zum Anlaß genommen werden können, den Elektromagneten stromlos zu machen und somit den Ventilkörper in seine Ruhestellung zurückkehren zu lassen. Die elektronische Überwachung von Bauteilen innerhalb des Kraftverstärkers ist allerdings problematisch, weil es schwierig ist, die hierzu erforderlichen Leitungen so unterzubringen, daß sie nicht stören und auch selber nicht störanfällig sind.

Der Erfindung liegt deshalb die Aufgabe zugrunde, einfache und wenig störanfällige Mittel zum Beenden einer elektromagnetisch ausgelösten Notbremsunterstützung bereitzustellen.

Die Aufgabe ist erfindungsgemäß mit den Merkmalen des Anspruchs 1 gelöst.

Die Erfindung ermöglicht es dem Fahrer, eine von ihm eingeleitete Notbremsung jederzeit auf rein mechanischem Wege zu beenden, auch wenn der Elektromagnet noch unter Strom steht und infolgedessen der Ventilkörper noch nicht in seine Ruhestellung zurückkehren kann. In diesem Fall übernimmt der Kolben mit seinem dritten Ventilsitz vorübergehend die Aufgabe, das weitere Einströmen von Luft in die erste Kammer zu verhindern und einen Druckausgleich zwischen den Kammern zu bewirken.

Vorteilhafte Weiterbildungen der Erfindung sind Gegenstand der Unteransprüche.

Ein Ausführungsbeispiel der Erfindung wird im folgenden anhand schematischer Zeichnungen mit weiteren Einzelheiten erläutert. Es zeigen:
- Fig. 1: einen Axialschnitt durch den hinteren Teil eines pneumatischen Bremskraftverstärkers mit elektromagnetischer Hilfssteuerung und
- Fig. 2: einen vergrößerten Ausschnitt aus Fig. 1.

Der dargestellte Bremskraftverstärker ist im wesentlichen rotationssymmetrisch in bezug auf eine Achse A, die bei Einbau in ein Kraftfahrzeug normalerweise mit der Fahrzeuglängsrichtung übereinstimmt. Der Bremskraftverstärker hat ein Verstärkergehäuse 10, in dem eine erste Kammer 12 und eine zweite Kammer 14 durch eine bewegliche Wand 16 voneinander getrennt sind. Das Verstärkergehäuse 10 ist durch achsparallele Zuganker 18 zusammengehalten, von denen nur einer dargestellt ist.

Zum Bremskraftverstärker gehört ein Steuerventil 20, das zum größten Teil in das Verstärkergehäuse 10 eingebaut ist und ein in bezug auf dieses axial bewegliches Ventilgehäuse 22 aufweist. Im Inneren des Ventilgehäuses 22 ist ein ringförmiger erster Ventilsitz 24 ausgebildet, der einen in die hintere Kammer 12 mündenden Kanal 26 von einem in die vordere Kammer 14 mündenden Kanal 28 trennt. Das Ventilgehäuse 22 weist ferner eine axiale Bohrung auf, in der ein hülsenförmiger Ventilkörper 30 längs der Achse A verschiebbar geführt ist. Der Ventilkörper 30 ist aus einem vorderen und einem hinteren Bauteil zusammengesetzt, die miteinander verrastet sind. Am hinteren Ende des hinteren, in der Zeichnung rechten, Bauteils des Ventilkörpers 30 ist ein zum ersten Ventilsitz 24 konzentrischer zweiter Ventilsitz 32 ausgebildet.

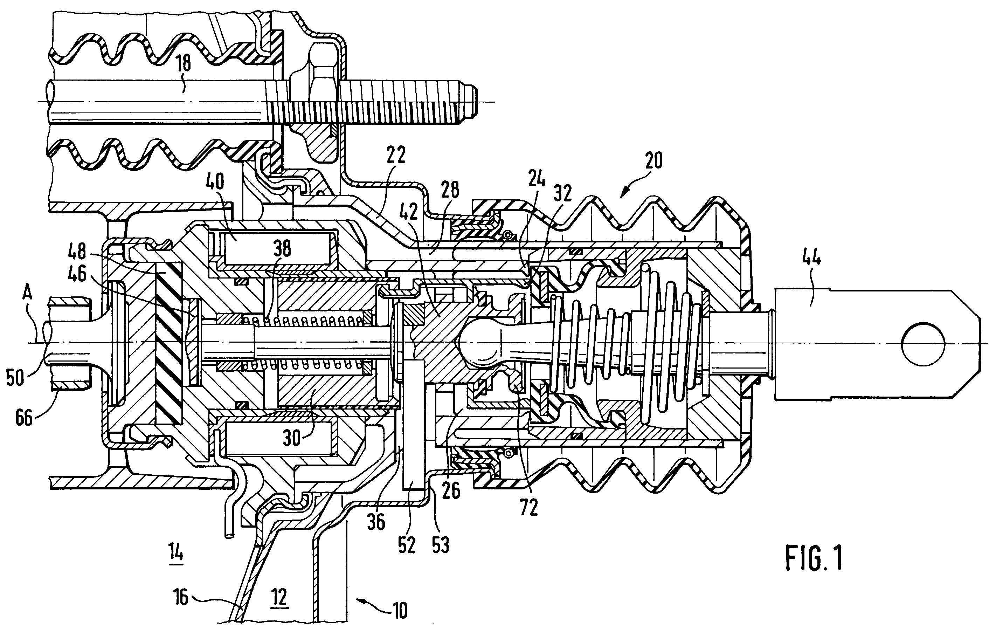

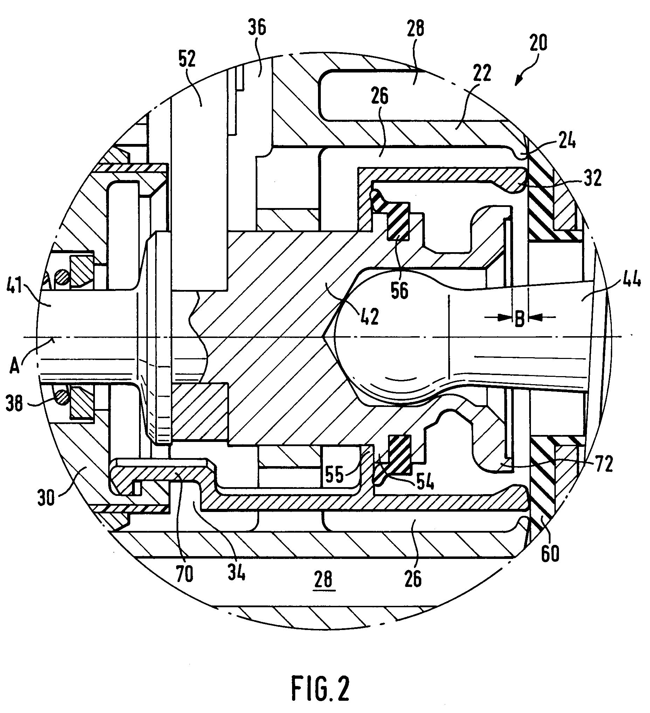

In einem Abstand vor dem zweiten Ventilsitz 32, in der Zeichnung also links davon, weist der Ventilkörper 30 eine radiale Aussparung 34 auf, an die sich eine ebenfalls radiale, in axialer Richtung jedoch breitere Aussparung 36 im Ventilgehäuse 22 anschließt. Der Ventilkörper 30 wird von einer axial vorgespannten Ventilfeder 38 ständig nach hinten, in Fig. 1 und 2 also nach rechts, gedrängt. In das Steuerventil 20 ist ein Elektromagnet 40 eingebaut, dem das linke Bauteil des Ventilkörpers 30 als Magnetanker derart zugeordnet ist, daß der Ventilkörper 30 gegen den Widerstand der Ventilfeder 38 nach vorne gezogen wird, wenn der Elektromagnet 40 bestromt wird.

Im Ventilgehäuse 22 ist ein Kolben 42 geführt, der an seinem hinteren Ende mit einem stangenförmigen Betätigungsglied 44 verbunden ist und an seinem vorderen Ende einen Kolbenkopf 46 aufweist. Dieser bildet zusammen mit einem in das Ventilgehäuse 22 eingebetteten Gummikörper 48 und einem davor angeordneten Kraftabgabeglied 50 eine mechanische Kraftübersetzung von bei Bremskraftverstärkern üblicher Art.

In eine Ringnut des Kolbens 42 ist ein Anschlagglied 52 derart eingerastet, daß es zu gemeinsamer Axialbewegung mit dem Kolben verbunden ist. Das Anschlagglied 52 erstreckt sich radial durch die Aussparungen 34 und 36 im Ventilkörper 30 bzw. Ventilgehäuse 22 nach außen und liegt in der abgebildeten Ruhestellung des Kolbens 42 an einem Anschlag 53 an, der an einer Schulter des Verstärkergehäuses 10 ausgebildet und somit von der Stelllung des Ventilgehäuses 22 unabhängig ist. In einem Abstand hinter dem Anschlagglied 52 ist am Kolben 42 ein flanschartiger Mitnehmer 54 ausgebildet, der in der abgebildeten Ruhestellung des Kolbens 42 und des Ventilkörpers 30 an einem am Ventilkörper ausgebildeten ringförmigen Widerlager 55 anliegt.

Dem Widerlager 55 des Ventilkörpers 30 ist eine ringförmige Lippendichtung 56 zugeordnet, die in einer im Kolben 42 ausgebildeten, radial nach außen offenen ringförmigen Ausnehmung liegt und in der abgebildeten Ruhestellung stirnseitig gegen das Widerlager 55 abdichtet. Der wirksame Durchmesser der Dichtung 56 ist etwas kleiner als der wirksame Durchmesser des zweiten Ventilsitzes 32. Hinter der Dichtung 56, in den Zeichnungen also rechts davon, herrscht ständig Atmosphärendruck. Die Dichtung 56 verhindert in der abgebildeten Ruhestellung des Ventilkörpers 30, daß Umgebungsluft durch den Ventilkörper 30 hindurch und weiter durch die Aussparungen 34 und 36 in die hintere Kammer 12 gelangt.

Das Betätigungsglied 44 ist durch eine hintere Rückstellfeder normalerweise in seiner abgebildeten Ruhestellung gehalten, in der ein innerhalb des Ventilgehäuses 22 in üblicher Weise angeordneter und durch eine Feder nach vorne vorgespannter ringförmiger Dichtkörper 60 am ersten Ventilsitz 24 abdichtend anliegt, gegen den zweiten Ventilsitz 32 jedoch nicht vollständig abdichtet, wobei zwischen den beiden Kammern 12 und 14 ein leichtes Druckgefälle besteht. Das hintere Bauteil des Ventilkörpers 30, das den zweiten Ventilsitz 32 aufweist, ist mit dem vorderen Bauteil des Ventilkörpers durch federnde Rastfinger 70 verbunden. An der Rückseite des Kolbens 42 ist ein dritter ringförmiger Ventilsitz 72 ausgebildet, dessen wirksamer Durchmesser etwas kleiner ist als derjenige der Dichtung 56. In der abgebildeten Ruhestellung hat der dritte Ventilsitz 72 vom Dichtkörper 60 einen Abstand B.

Im Betrieb ist die vordere Kammer 14 ständig an eine Vakuumquelle angeschlossen. Die bewegliche Wand 16 und das mit ihr zu gemeinsamer Axialbewegung verbundene Ventilgehäuse 22 werden von einer vorderen Rückstellfeder in ihre abgebildete hinteren Endstellung gedrängt.

Im unbetätigtem Zustand liegt das Anschlagglied 52 am Anschlag 53 an, wodurch die Ruhestellung des Kolbens 42 festgelegt ist. Der Ventilkörper 30 stützt sich mit nahezu der gesamten Kraft der zwischen ihm und dem Kolben 42 eingespannten Ventilfeder 38 am Mitnehmer 54 ab, wodurch auch die Ruhestellung des Ventilkörpers 30 festgelegt ist. Dabei liegt der zweite Ventilsitz 32 mit einer geringen Restkraft der Ventilfeder 38 am Dichtkörper 60 an.

Wenn das Betätigungsglied 44, das beispielsweise mit dem Bremspedal eines Kraftfahrzeugs verbunden ist, nach vorne verschoben wird und dadurch den Kolben 42 nach vorne schiebt, nimmt dessen Mitnehmer 54 das Widerlager 55 und somit den gesamten Ventilkörper 30 mit, sodaß dessen Ventilsitz 32 sich vom Dichtkörper 60 löst und von hinten in das Ventilgehäuse 22 einströmende Umgebungsluft durch den Kanal 26 und weiter durch die radiale Aussparung 36 im Ventilgehäuse 22 in die hintere Kammer 12 gelangen läßt. Die vordere Kammer 14 wird von der hinteren Kammer 12 getrennt, da sich der Dichtkörper 60 fest an den ersten Ventilsitz 24 anlegt. Somit entsteht zwischen den beiden Kammern 12 und 14 ein Druckgefälle, das die bewegliche Wand 16 samt dem Ventilgehäuse 22 und dem Kraftabgabeglied 50 sich nach vorne bewegen läßt. Das Kraftabgabeglied 50 überträgt die auf ihn einwirkende Kraft auf einen Hauptbremszylinder 66, dessen hinterer Endbereich in Fig. 1 dargestellt ist.

Falls die mechanisch über den Kolben 42 bewirkte Vorwärtsbewegung des Ventilkörpers 30 und die dabei stattfindende Kraftabgabe an den Hauptbremszylinder 66 beschleunigt und verstärkt werden soll, wird der Elektromagnet 40 erregt, sodaß er den Ventilkörper 30 vom Mitnehmer 54 weg nach vorne zieht und dadurch den freien Strömungsquerschnitt zwischen dem zweiten Ventilsitz 32 und dem Dichtkörper 60 vergrößert. Eine derart verstärkte Kraftausübung des Bremskraftverstärkers kann beispielsweise wünschenswert sein, wenn ein abzubremsendes Fahrzeug stark beladen ist oder wenn eine besonders schnelle Vorwärtsbewegung des Betätigungsgliedes 44 darauf schließen läßt, daß eine Notbremsung erwünscht ist.

In solchen Fällen wird dem Elektromagneten 40 Strom über ein Steuergerät zugeführt, zu dem ein das Betätigungsglied 44 überwachender Beschleunigungssensor gehört.

Nach dem Abschalten des Elektromagneten 40 wird der Ventilkörper 30 von der Ventilfeder 38 wieder nach hinten gedrängt, sodaß das Widerlager 55 sich wieder an den Mitnehmer 54 anlegt und die Dichtung 56 erneut wirksam wird. Nach dem Ende einer mechanischen Krafteinleitung über das Betätigungsglied 44 kehrt der Kolben 42 zusammen mit dem Ventilkörper 30 in die Ruhestellung zurück. Die bewegliche Wand 16 und das Ventilgehäuse 22 nehmen an dieser Rückkehrbewegung solange nicht teil, wie noch ein Druckgefälle zwischen den Kammern 12 und 14 besteht. Das Druckgefälle wird dadurch abgebaut, daß der Ventilkörper 30 sich mit seinem zweiten Ventilsitz 32 an den Dichtkörper 60 anlegt, wodurch die hintere Kammer 12 von der Atmosphäre getrennt und anschließend der Dichtkörper um eine kleine Strecke nach hinten gedrängt wird, sodaß er sich vom ersten Ventilsitz 24 löst.

Wenn nach einer mechanisch eingeleiteten und elektromagnetisch unterstützten Betätigung des Bremskraftverstärkers das Betätigungsglied 44 zurückgezogen wird, während der Elektromagnet 42 noch bestromt wird, legt sich der dritte Ventilsitz 72 an den Dichtkörper 60 an, sodaß nun er es ist der die hintere Kammer 12 von der Atmosphäre trennt. Die Kraft der Rückstellfeder bewirkt, daß der Kolben 42 mit seinem dritten Ventilsitz 72 den Dichtkörper 60 soweit nach hinten drängt, daß er den ersten Ventilsitz 24 freigibt. Infolgedessen stellt sich Druckgleichgewicht zwischen den Kammern 12 und 14 ein, sodaß die bewegliche Wand 16, und mit ihr das Ventilgehäuse 22, in die gezeichnete Ruhestellung zurückkehrt.

## Patentansprüche

1. Pneumatischer Kraftverstärker mit elektromagnetischer Hilfssteuerung, insbesondere für Kraftfahrzeug-Bremsanlagen, mit
- einem Verstärkergehäuse (10), in dem
-- mindestens eine erste Kammer (12) und eine zweite Kammer (14) enthalten und
-- durch eine bewegliche Wand (16) voneinander getrennt sind,
- einem Ventilgehäuse (22), das
-- mit der beweglichen Wand (16) zu gemeinsamer axialer Relativbewegung in bezug auf das Verstärkergehäuse (10) verbunden ist und
-- einen ersten Ventilsitz (24) aufweist,
- einem Dichtkörper (60), der
-- im Ventilgehäuse (22) axial beweglich angeordnet und
-- in Richtung zum ersten Ventilsitz (24) hin vorgespannt ist,
- einem Kolben (42), der
-- mittels eines Betätigungsgliedes (44) axial vom Dichtkörper (60) weg bewegbar ist,
- einem Ventilkörper (30), der
-- einen dem Dichtkörper (60) zugeordneten zweiten Ventilsitz (32) aufweist,
-- in Richtung zum Dichtkörper (60) hin vorgespannt ist,
-- vom Kolben (42) in Richtung vom Dichtkörper (60) weg mitnehmbar ist und
-- mittels eines Elektromagneten (40) auch unabhängig vom Kolben (42) in Richtung vom Dichtkörper (60) weg bewegbar ist,
- einer Dichtung (56) zwischen Ventilkörper (30) und Kolben (42),
- einem Anschlagglied (52), das eine gemeinsame Ruhestellung des Kolbens (42) und des Ventilkörpers (30) definiert, in der die erste Kammmer (12) gegen Einströmen von Luft abgedichtet und mit der zweiten Kammer (14) verbunden ist, und
- einem Kanal (26), durch den Luft in die erste Kammer (12) einströmt, wenn der Ventilkörper (30) seine Ruhestellung verläßt, wobei sich der Dichtkörper (60) an den ersten Ventilsitz (24) anlegt und die Verbindung zwischen den beiden Kammern (12, 14) unterbricht, dadurch gekennzeichnet, daß am Kolben (42) ein dritter Ventilsitz (72) ausgebildet ist, der
- vom Dichtkörper (60) einen Abstand (B) hat, wenn Ventilkörper (30) und Kolben (42) in Ruhestellung sind,
- sich jedoch an den Dichtkörper (60) anlegt und dadurch das Einströmen von Luft in die erste Kammer (12) verhindert, wenn das Betätigungsglied (44) freigegeben wird, während der Ventilkörper (30) vom Elektromagneten (40) in einer vom Dichtkörper (60) entfernten Stellung gehalten wird.

2. Kraftverstärker nach Anspruch 1,
dadurch gekennzeichnet, daß das Widerlager (55) am Ventilkörper (30) so angeordnet ist, daß es in der Ruhestellung des Kolbens (42) an dessen Mitnehmer (54) anliegt und dadurch die Ruhestellung des Ventilkörpers (30) abhängig von derjenigen des Kolbens (42) bestimmt.

3. Kraftverstärker nach Anspruch 1 oder 2,
dadurch gekennzeichnet, daß die Dichtung (56) zwischen Ventilkörper (30) und Kolben (42) axial wirkend und so angeordnet ist, daß sie nur dann abdichtet, wenn das Widerlager (55) mindestens annähernd am Mitnehmer (54) anliegt.

## Claims

1. A pneumatic booster with solenoid auxiliary control, particularly for motor vehicle brake systems, having
- a booster housing (10) in which
-- at least a first chamber (12) and a second chamber (14) are contained and
-- are separated from each other by a movable wall (16),
- a valve body (22) which
-- is connected to said movable wall (16) for common axial relative movement with reference to said booster housing (10) and comprises
-- a first valve seat (24),
- a sealing element (60) which is
-- arranged axially movable in said valve body (22) and
-- pretensioned in the direction of said first valve seat (24),
- a piston (42) which
-- is movable by means of an actuator element (44) axially away from said sealing element (60),
- a valve barrel (30)
-- having a second valve seat (32) assigned to said sealing element (60),
-- being pretensioned in the direction of said sealing element (60),
-- being adapted to be taken along by said piston (42) in the direction away from said sealing element (60) and
-- being movable in the direction away from the sealing element (6) by means of a solenoid (40), also independently of said piston 42,
- a seal (56) between said valve barrel (30) and said piston (42),
- a stopper element (52) defining a common rest position of said piston (42) and said valve barrel (30) in which said first chamber (12) is sealed off from the inflow of air and is connected to said second chamber (14), and
- a passage (26) through which air flows into said first chamber (12) when said valve barrel (30) leaves its rest position, said sealing element (60) being in contact with said first valve seat (24) and discontinuing the connection between said two chambers (12, 14), characterized in that on said piston (42) a third valve seat (72) is formed which
- has a distance (B) from said sealing element (60) when said valve barrel (30) and said piston (42) are in the rest position,
- but which abuts said sealing element (60) to thus prevent the inflow of air in said first chamber (12) when said actuator element (44) is released, whilst said valve barrel (30) is maintained by said solenoid (40) in a position distant from said sealing element (60).

2. The booster according to claim 1,
characterized in that said abutment (55) is disposed on said valve barrel (30) so that, in the rest position of said piston (42), it is in contact with said coupling element (54) thereof and thereby defining the rest position of said valve barrel (30) as a function of that of said piston (42).

3. The booster according to claim 1 or 2,
characterized in that said seal (56) is axially effective and disposed in such a manner between said valve barrel (30) and said piston (42) that it has a sealing action only when said abutment (55) abuts at least more or less said coupling element (54).

## Revendications

1. Servomoteur pneumatique à commande électromagnétique auxiliaire, en particulier pour systèmes de freinage de véhicules automobiles, comprenant
- un boitier de servomoteur (10) dans lequel
-- au moins une première chambre (12) et une seconde chambre (14) sont contenues et
-- sont séparées l'une de l'autre par une paroi mobile (16),
- un boîtier de soupape (22) qui
-- est relié à la paroi mobile (16) pour se déplacer avec celle-ci conjointement axialement par rapport au boîtier de servomoteur (10) et
-- présente un premier siège de soupape (24),
- un élément d'obturation (60) qui
-- est disposé mobile axialement dans le boîtier de soupape (22) et
-- est poussé en permanence en direction du premier siège de soupape (24),
- un piston (42) qui
-- peut être déplacé axialement dans le sens de l'éloignement de l'élément d'obturation (60) au moyen d'un élément d'actionnement (44)
- un corps de soupape (30) qui
-- présente un second siège de soupape (32)) associé à l'élément d'obturation (60),
-- est poussé en permanence en direction de l'élément d'obturation (60),
-- peut être entrainé par le piston (42) dans le sens de l'éloignement de l'élément d'obturation (60) et
-- peut aussi être déplacé indépendamment du piston (42) au moyen d'un électroaimant (40) dans le sens de l'éloignement de l'élément d'obturation (60),
- un joint d'étanchéité (56) entre le corps de soupape (30) et le piston (42),
- un élément d'arrêt (52) qui définit une position de repos commune du piston (42) et du corps de soupape (30) dans laquelle la première chambre (12) est hermétiquement fermée contre toute entrée d'air et communique avec la seconde chambre (14), et
- un canal (26) à travers lequel de l'air s'écoute dans la première chambre (12) lorsque le corps de soupape (30) quitte sa position de repos, l'élément d'obturation (60) s'appliquant alors sur le premier siège de soupape (24) et interrompant la communication entre les deux chambres (12, 14), caractérisé en ce que un troisième siège de soupape (72) est formé sur le piston (42), qui
- présente un espacement (B) par rapport à l'élément d'obturation (60) lorsque le corps de soupape (30) et le piston (42) sont en position de repos,
- s'applique cependant contre l'élément d'obturation (60) et empêche ainsi l'écoulement d'air dans la première chambre (12) lorsque l'élément d'actionnement (44) est libéré pendant que le corps de soupape (30) est maintenu par l'électroaimant (40) dans une position éloignée de l'élément d'obturation (60).

2. Servomoteur selon la revendication 1,
caractérisé en ce que la butée (55) est disposée sur le corps de soupape (30) de telle façon qu'elle s'applique en position de repos du piston (42) sur l'élément d'entraînement (54) de celui-ci et qu'elle détermine ainsi la position de repos du corps de soupape (30) en fonction de celle du piston (42).

3. Servomoteur selon la revendication 1 ou 2,
caractérisé en ce que le joint d'étanchéité (56) entre le corps de soupape (30) et le piston (42) a un effet axial et est disposé de telle façon qu'il ne réalise l'étanchéité que lorsque la butée (55) est au moins approximativement appliquée à l'élément d'entraînement (54).
